# EUROPEAN PATENT APPLICATION

(11) **EP 1 391 156 A1**
(43) Date of publication of application: **25.02.2004**
(21) Application number: 01936467.8
(22) Date of filing: 31.05.2001
(51) Int. Cl.: A23N 1/00, A47J 19/02, B30B 9/02, B30B 9/20

(54) **IMPROVEMENTS TO CITRUS FRUIT-SQUEEZING MACHINES**

(71) Applicant: ZUMOMATIC ESPANA, S.L., E-08005 Barcelona (ES)
(72) Inventor: VASCONCELOS ESCALADA, Nuno, E-08850 Gava- Barcelona (ES)
(74) Representative: Cobas Horcajo, Susana
(86) International application number: PCT/ES2001/000222
(87) International publication number: WO 2002/096226

(57) **Abstract**

These improvements are applicable to the juicer machines with a casing (1) with an upper feeder inlet (3) and a front cavity where the following are housed: a rotating drum (4), a squeezing arm (5), a fixed drum (7) with a blade (8) and a squeezing surface (73), a lower grid (9) to convey the peel towards a removable container (10) and for the juice to pass through to a juice container. The squeezing arm (5) and the surface (73) of the fixed drum, show an angular geometry, the rotating drum being connected to a motor element (16) controlled by an electronic board (17) with photoelectric cells (171, 172, 173) facing a disc (18) joined to the drive shaft and which has holes (181, 182, 183) for their selective activation.

## Description

### OBJECT OF THE INVENTION

The present invention refers, as its title indicates, to improvements introduced in citrus fruits juicer machines, and specifically in those machines equipped with a casing in which a rotating drum is housed, which is responsible for introducing the fruit to be squeezed in a fixed drum equipped with a blade to cut the fruit and a surface against which the fruit is squeezed by a rotating arm joined to the machine's drive shaft.

### BACKGROUND OF THE INVENTION

In this section the existence of the utility model 9400766 referring to a citrus fruit juicer machine and to the patent of the invention 9800682 in which an improved automatic citrus fruit juicer machine is disclosed, should be highlighted.

The citrus fruit juicer machine, object of the utility model 9400766, has a prismatic casing with a fruit feeder channel, with the following being housed in its interior: a fixed drum, a rotating arm coaxial with the former, a fruit selector disc which rotates due to the action of the squeezing arm and is responsible for introducing the fruit to be squeezed inside the fixed drum, causing it to be cut by a blade mounted on the fixed drum and the pressing of the fruit against a wall defined in said fixed drum, the juice falling through a chute and a filter to a cavity where the juice container is situated, whilst the fruit's peel falls due to gravity into a removable collector.

Said utility model has been devised so that the motor's rotation movements during the squeezing cycle are controlled by an electronic control activated by means of buttons.

The improved automatic citrus fruit juicer, object of the patent of the invention 9800682, has a similar composition to that of said utility model, providing some advantages such as the incorporation of a control system with the capacity to be programmed by means of a dial and the incorporation of a practicable screen to avoid juice splashes during the fruit squeezing.

In the two said references, during a squeezing cycle, it is necessary for the motor to initially rotate in one direction in order to cause the rotation of the disc or drum responsible for introducing the fruit into the machine, then rotating in the opposite direction so that the arm can cut the fruit with the help of the blade fitted on the fixed drum and its subsequent squeezing, with the motor finally rotating in the opposite direction to return to the initial position.

Therefore, in each squeezing cycle, the motor should perform two reversals in the rotation direction which results especially complex with the means used in said references.

Another of the problems that said references present, is determined by the use of a flat-surfaced squeezing arm, as when the fruit is pressed against the wall designed for this, in the fixed drum, the fruit is not totally squeezed.

Another of the inconveniences that the juicer machines of said references present is that the fixed drum is open at the front of the machine and there exists the possibility that the operator puts his hand inside with the consequent risk of accidents in the case that the hand is pressed by the squeezing arm against the blade or against the fixed wall of said drum.

### DESCRIPTION OF THE INVENTION

To resolve said problems, improvements introduced in citrus fruit juicer machines, object of this invention, have been devised; the said machines being of the type previously described, i.e. they have a casing with a front door and an upper fruit feeder inlet, with a front cavity being defined in the inside of the casing in which the following are housed: a rotating drum, a squeezing arm operated by the machine's drive shaft, a fixed drum with a curved wall with a blade to cut the fruit and a protuberance which defines a surface against which fruit is squeezed by the arm, a lower grid to convey the peel towards a removable container and filters for the juice to pass through to a tray with a discharge orifice to a juice container.

In accordance with this invention's improvements, the squeezing arm and the fixed drum wall against which the fruit is pressed, show an angular geometry to prevent the displacement of the fruit in a radial direction and to obtain a greater fruit deformation during the squeezing.

This special feature, of great constructive simplicity, considerably improves the fruit squeezing and obtains a greater quantity of juice from the same number of pieces of fruit.

It has also been devised that the rotating drum responsible for introducing the fruit into the fixed drum is assembled with the possibility of free rotation on a removable threaded rod screwed onto a screw that emerges from the rear wall of the machine's front cavity, so that said rotating drum can be quickly removed manually in order to clean it.

The fixed drum has a central orifice for the machine's drive shaft to loosely pass through and two additional orifices for the through housing of an anti-rotation pin and a threaded rod that emerge from the rear wall of the machine's front cavity.

The anti-rotation pin's mission is to absorb the thrust transmitted by the squeezing arm during the fruit pressing, preventing the rotation of said drum.

Another of the improvements of this invention consists of the fixed drum having a removable front cover with orifices for the loose housing of the drive shaft's end, for the tight fitting of the anti rotation pin's end and for the threaded rod's end to pass through; said cover being fixed in the working position by means of a hold-down nut which acts on the threaded rod's end.

The incorporation of this cover prevents the operator from accessing the path of the squeezing arm and the juice obtained during the juicing from splashing those parts of the machine that are not housed inside the cavity delimited by the fixed drum and its cover.

By means of this cover configuration, to dismantle it and to extract the fixed drum, it is just necessary to unscrew the hold-down nut mounted in the end of the previously mentioned threaded rod.

In accordance with this invention, the rotating drum has a curved-concave seating on its outer surface to collect the fruit to be squeezed in the upper area of the machine and its introduction in the fixed drum; and a recess of general "V" geometry for the squeezing arm to act on it, said recess defining, on one of the sides, an angular surface whose purpose is to facilitate the release of the squeezing arm from said recess when the arm is displaced in the direction of the cutting and squeezing of the fruit.

In this machine, like the references mentioned in the previous section, the drive shaft is connected to a motor element which is controlled by an electronic control board; said electronic control board in this invention has been devised to be equipped with photoelectric cells in a parallel arrangement in a fixed position and facing a disc joined to the drive shaft's rear end, said disc having the means to selectively activate the photoelectric cells in the angular positions corresponding to the points of the stopping and reversal in the direction of the motor's rotation.

The means defined in said disc for the selective activation of said photoelectric cells are comprised of angularly displaced holes which are distributed in concentric trajectories of the disc, alternatively facing the respective photoelectric cells which cause the reversal in the direction of the motor's rotation and its stopping at the final position of each squeezing cycle.

The use of said photoelectric cells together with the disc equipped with the holes responsible for selectively activating them, provides great machine reliability and considerably reduces its manufacturing costs with regards to the means of control of the motor.

### DESCRIPTION OF THE DRAWINGS

To complement the description being made and for the object of helping towards a better understanding of the characteristics of the invention, a set of drawings is attached, wherein the following is represented with an illustrative, non-limiting character:

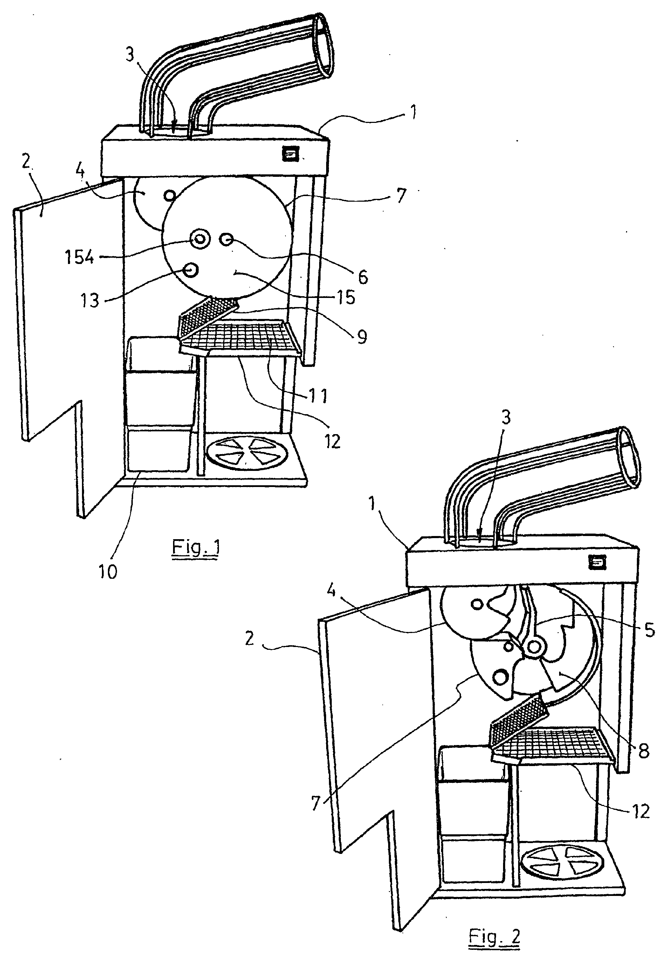

Figure 1 shows a front perspective view of a citrus fruit juicer machine with the improvements which are the object of the invention, with the front door shown as open.
Figure 2 shows a similar view, in which the front cover of the fixed drum has been eliminated, allowing the observation of the blade and the squeezing arm.

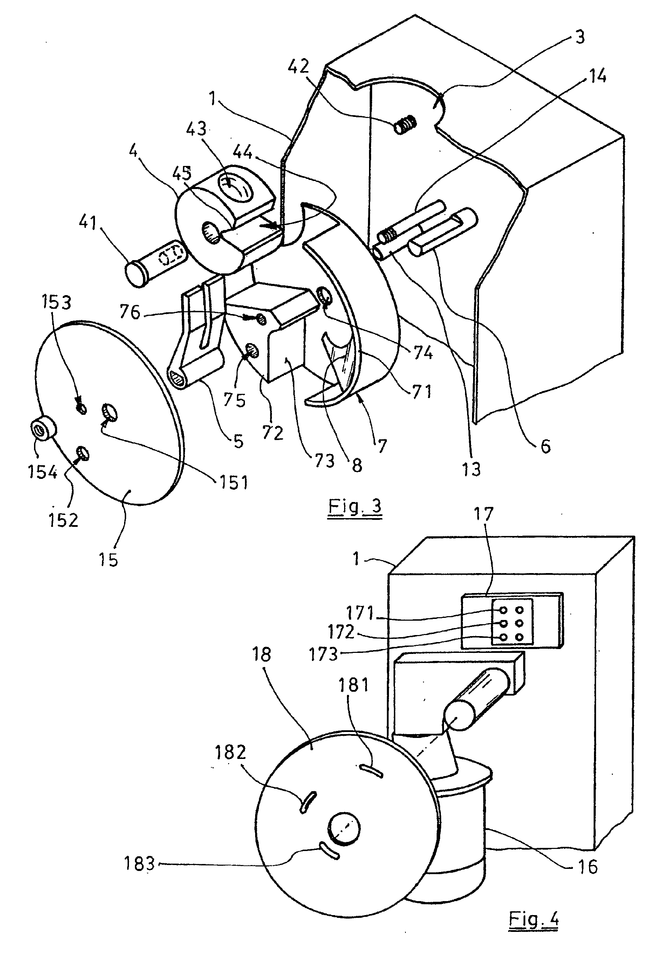

Figure 3 shows a front perspective view of an upper part of the machine in which an exploded view of the elements used has been shown to perform the introduction, cutting and squeezing of the fruits.
Figure 4 shows a rear view of part of the machine in which the photoelectric cells used to control the rotation reversal and the stopping of the motor can be observed. In this figure, the disc with holes has been shown removed from the drive shaft and aligned with it.

### PREFERRED EMBODIMENT OF THE INVENTION

As can be observed in the stated figures, the citrus fruit juicer machine shown in the figures has a casing (1) with a front door (2) and an upper feeder inlet (3) for the introduction of fruit to be squeezed.

On the inside of the casing (1) a cavity is defined in which the following are housed: a rotating drum (4), a squeezing arm (5) operated by the machine's drive shaft (6), a fixed drum (7) with a curved wall (71) on which a blade (8) is mounted and of a protuberance (72) with a surface (73) against which the fruit is pressed by the arm (5), a lower grid (9) to convey the peel towards a removable container (10) and filters (11) through which the juice passes to a tray (12) under which, there is a juice container to collect the juice.

As can be observed in the figures, the squeezing arm (5) and the wall (73) show an angular geometry for the purpose of preventing the displacement of the fruit during its squeezing and to obtain the greatest possible amount of juice.

The rotating drum (4) is assembled with free rotation capacity on a hollow rod (41) which is screwed onto a screw (42) joined to the casing (1) and which emerges from the rear wall of the machine's front cavity.

The drum (4) has a curved-concave seating (43) on its outer surface for the individualized collection of the fruits to be squeezed and a recess (44) of general "V" geometry, one of whose sides (45) defines an angular surface.

The operation of the arm (5) on rotating in an anti-clockwise direction acts on the recess (44) of the rotating drum (4) causing its rotation against the rod (41) and the introduction of the fruit housed in the seating (43) towards the inside of the fixed drum (7). When the direction of the squeezing arm's (5) rotation is reversed, this displaces the fruit which has been previously introduced in the fixed drum (7) causing it to be cut by the blade (8) and pressed against the wall (73) of said fixed drum (7).

The fixed drum (7) has a central orifice (74) for the drive shaft (6) to loosely pass through and two additional orifices (75 and 76) for the through housing of an anti-rotation pin (13) and of a threaded rod (14) joined to the casing (1). Said fixed drum (7) has a removable front cover (15) with orifices (151, 152 and 153) for the loose housing of the end of the drive shaft (6), for the tight fitting of the end of the anti-rotation pin (13) and for the end of the threaded rod (14) to pass through, fixing the cover (15) in the working position by means of a hold-down nut (154) which is mounted on the end of said threaded rod (14).

The drive shaft (6) is operated by a motor element (16) set out in the rear part of the machine, as is shown in figure 4, said motor element (16) being controlled by an electronic control board (17). To achieve the reversal in the direction of the rotation of the motor (16) during the introduction of the fruit, its squeezing and the return of the arm (5) to the initial position, the electronic board (17) has been devised so that it has photoelectric cells (171) in a parallel arrangement, in a fixed position and facing a disc (18) joined to the rear end of the drive shaft (6); having said disc (18) holes (181, 182, 183), angularly displaced and set out in concentric trajectories so that when they face the photoelectric cells (171, 172, 173) these cause, through the electronic control board (17), the reversal in the rotation direction of the motor (16) or its stopping.

Once the nature of this invention has been sufficiently described, as well as an example of preferred embodiment, it is recorded for the appropriate purpose that the materials, form, size and arrangement of the elements described can be modified, provided that this does not mean an alteration in the essential characteristics of the invention which is claimed hereunder.

## Claims

1. Improvements introduced in citrus fruit juicer machines; of the type that have a casing (1) with a front door (2) and an upper feeder inlet (3) to introduce the fruits, a front cavity being defined inside the casing in which the following are housed: a rotating drum (4), a squeezing arm (5) operated by the machine's drive shaft (6), a fixed drum (7) with a curved wall (71) with a blade (8) to cut the fruit and a protuberance (72) which defines a surface (73) against which the fruit is squeezed by the arm (5), a lower grid (9) which conveys the peel towards a removable container (10) and filters (11) for the juice to pass through to a tray (12) with a discharge orifice to a juice container; **characterized in that** the squeezing arm (5) and the surface (73) of the fixed drum, against which the fruit is pressed, show an angular geometry to prevent the displacement of the fruit in a radial direction to obtain a greater fruit deformation during the squeezing.

2. Improvements, according to the preceding claim, **characterized in that** the rotating drum (4) is assembled with free rotation capacity on a removable hollow rod (41) screwed on a screw (42) which emerges from the rear wall of the machine's front cavity.

3. Improvements, according to the preceding claims, **characterized in that** the fixed drum (7) has a central orifice (74) for the machine's drive shaft (6) to loosely pass though and two additional orifices (75,76) for the through housing of an anti-rotation pin (13) and of a threaded rod (14) which emerge from the rear wall of the machine's front cavity.

4. Improvements, according to the preceding claims, **characterized in that** the fixed drum (7) has a removable front cover (15) with orifices (151, 152, 153) for the loose housing of the end of the drive shaft (6) for the tight fitting of the end of the anti-rotation pin (13) and for the end of the threaded rod (14) to pass through, said cover (15) being fixed in the working position by means of a hold-down nut (154) which acts on the end of the threaded rod (14).

5. Improvements, according to the preceding claims, **characterized in that** the rotating drum (4) has a curved-concave seating (43) on its outer surface to collect the fruit to be squeezed in the upper area of the machine and its introduction in the fixed drum (7); and a recess (44) of general "V" geometry for the operation of the squeezing arm on it, one of the sides (45) of said recess (44) defining an angular surface.

6. Improvements, according to the preceding claims, the drive shaft (6) being connected to a motor element (16) controlled by an electronic control board (17); **characterized in that** the electronic control board has photoelectric cells (171, 172, 173) in a parallel arrangement in a fixed position and facing a disc (18) joined to the rear end of the drive shaft (6), said disc (18) having means for the selective activation of the photoelectric cells (171, 172 173) in the angular positions corresponding to points of reversal in the rotation direction and the stopping of the motor (16).

7. Improvements, according to the preceding claims, **characterized in that** the means defined in the disc (18) for the selective activation of the photoelectric cells (171, 172, 173) are comprised of holes (181, 183, 183) angularly displaced and distributed in concentric trajectories of the disc (18), alternatively facing the respective photoelectric cells (171, 172, 173) which cause the reversal in the rotation direction of the motor (16) and its stopping in the final position of each squeezing cycle.
